# FASCICULE DE BREVET EUROPEEN

(11) **EP 1 446 928 B1**
(45) Date de publication et mention de la délivrance du brevet: **19.10.2005**
(21) Numéro de dépôt: 02735521.3
(22) Date de dépôt: 29.04.2002
(51) Int. Cl.: H04L 27/36

(54) **PRE-DISTORTION ADAPTATIVE D'UN GENERATEUR D'UN SIGNAL RADIOFREQUENCE MODULE EN PHASE OU FREQUENCE ET EN AMPLITUDE**
ADAPTIVE VORVERZERRUNG EINES PHASEN- ODER FREQUENZ-MODULIERTEN UND AMPLITUDEN-MODULIERTEN FUNKFREQUENZSIGNALGENERATORS
ADAPTIVE PRE-DISTORTION OF AN AMPLITUDE- AND FREQUENCY- OR PHASE-MODULATED RADIO FREQUENCY SIGNAL GENERATOR

(30) Priorité: 04.05.2001 FR 0106006
(43) Date de publication de la demande: 18.08.2004
(73) Titulaire: Eads Telecom, 78180 Montigny Le Bretonneux (FR)
(72) Inventeur: CHECOURY, Xavier, F-75018 Paris (FR); GAGEY, Olivier, F-75006 Paris (FR)
(74) Mandataire: Verdure, Stéphane
(86) Numéro de dépôt international: PCT/FR2002/001483
(87) Numéro de publication internationale: WO 2002/091698

(56) Documents cités:
- WO-A-01/76169
- FR-A- 2 807 252
- MANN S ET AL: "INCREASING TALK-TIME WITH EFFICIENT LINEAR PA'S" IEE SEMINAR ONTETRA MARKET AND TECHNOLOGY DEVELOPMENTS, IEE, LONDON,, GB, 10 février 2000 (2000-02-10), pages 6-1-6-7, XP002155349
- PETROVIC V ET AL: "THE DESIGN OF VHF SSB POLAR-LOOP TRANSMITTERS" CONFERENCE ON COMMUNICATIONS EQUIPMENT AND SYSTEMS. 20 - 22 APRIL, 1982, LONDON, I.E.E, GB, vol. NO. 209, avril 1982 (1982-04), pages 148-155, XP000817935

## Description

La présente invention concerne un générateur d'un signal radiofréquence modulé, d'une part, en phase ou en fréquence, et, d'autre part, en amplitude, convenant pour l'émission radioélectrique via une antenne ou un câble, ainsi qu'un émetteur l'incorporant.

Un tel générateur trouve des applications dans des émetteurs radiofréquences, notamment de stations mobiles ou de stations fixes d'un système de radiocommunications, par exemple un système privé de radiocommunications professionnelles (système PMR, de l'anglais « Private Mobile Radiocommunication »).

Les systèmes de radiocommunications actuels utilisent classiquement, pour la transmission de données numériques codant un signal audio ou, plus généralement, des informations de toute nature, des modulations dites à enveloppe constante. Avec de telles modulations, les données émises ne sont pas portées par l'amplitude d'une porteuse radiofréquence mais par sa phase ou sa fréquence.

Toutefois, on cherche actuellement à transmettre plus d'informations à l'intérieur d'une bande de fréquence de largeur donnée, affectée à un canal de transmission, de manière à augmenter le rendement spectral des systèmes de radiocommunications. Le but est de répondre à l'accroissement de la demande de trafic dans le spectre radiofréquence, tout en respectant les contraintes liées au partage de ce spectre. C'est pourquoi on envisage la réintroduction d'une modulation d'amplitude, en plus de la modulation de phase ou de fréquence. Ainsi, on cherche à mettre au point de nouveaux systèmes de radiocommunications utilisant, pour la transmission des informations, une modulation composite, comportant à la fois une composante de modulation de phase et une composante de modulation d'amplitude.

Malgré cela, la nécessité de maintenir un rendement en puissance important de l'émetteur (ce qui est particulièrement requis dans le cadre d'une utilisation de l'émetteur dans un équipement de radiocommunication portatif), incite à continuer de faire fonctionner l'amplificateur de puissance radiofréquence dans une zone de fonctionnement proche de la saturation.

Or, comme on le sait, l'émetteur présente dans une telle zone de fonctionnement des non-linéarités d'amplification comprenant des non-linéarités en amplitude et des non-linéarités en phase. Dans la littérature, on désigne souvent ces non-linéarités en amplitude et en phase par les termes, respectivement, conversions amplitude / amplitude (ou conversions AM / AM) et conversions amplitude / phase (ou conversions AM / PM). Ces non-linéarités engendrent une distorsion en amplitude et une distorsion en phase du signal émis, qui dégradent les performances de l'émetteur en termes de qualité de l'émission.

Il est donc souhaitable d'annuler les effets des non-linéarités d'amplification induites par l'amplificateur de puissance radiofréquence, afin de ne pas dégrader la qualité de l'émission. Plusieurs techniques sont connues, qui permettent d'obtenir ce résultat.

Dans la technique CLLT (de l'anglais "Cartesian Loop Linear Transmitter"), le signal à émettre est tout d'abord généré en bande de base. Un modulateur assure la transposition du signal en bande de base vers le domaine des radiofréquences (transposition montante). Enfin, le signal radiofréquence est amplifié dans l'amplificateur de puissance. Un coupleur suivi d'un démodulateur permettent de prélever une partie du signal radiofréquence en sortie de l'amplificateur de puissance et de la transposer en bande de base (transposition descendante). Le signal généré en bande de base est comparé avec le signal ainsi démodulé en bande de base, au moyen d'un comparateur dont la sortie attaque le modulateur. On effectue ainsi un asservissement analogique du signal radiofréquence émis sur le signal généré en bande de base. Cet asservissement permet d'annuler les non-linéarités présentes dans la chaîne de transposition montante, en particulier les non-linéarités induites par le modulateur et par l'amplificateur de puissance radiofréquence. Les performances de linéarisation de cette technique se trouvent toutefois limitées par la bande passante de la boucle d'asservissement. Pour des problèmes de stabilité de la boucle d'asservissement, le gain de boucle est en effet généralement faible, d'où une correction des non-linéarités limitées. Usuellement, il est nécessaire d'inclure un détecteur d'instabilité de la boucle d'asservissement. En outre, la pureté spectrale se trouve limitée par la présence d'un modulateur classique dans la chaîne de transposition montante.

Dans la technique ABP (de l'anglais "Adaptative Baseband Predistortion"), une pré-distorsion adaptative est appliquée au signal généré en bande de base, généralement par un traitement numérique. Le signal pré-distordu est généré en bande de base, via un convertisseur numérique/analogique. Puis, le signal pré-distordu est transposé vers le domaine des radiofréquences (transposition montante) grâce à un modulateur. Enfin, le signal radiofréquence est amplifié dans l'amplificateur de puissance radiofréquence. La pré-distorsion permet d'annuler les non-linéarités présentes dans la chaîne de transposition montante, en particulier les non-linéarités induites par le modulateur et par l'amplificateur de puissance radiofréquence. Il s'agit d'une pré-distorsion adaptative. A cet effet, un coupleur suivi d'un démodulateur permettent de prélever une partie du signal radiofréquence émis et de la transposer en bande de base (transposition descendante). Le signal démodulé en bande de base est numérisé et comparé avec le signal généré en bande de base (signal désiré). Une adaptation des coefficients de pré-distorsion permet alors de faire converger le signal ainsi démodulé vers le signal désiré. La chaîne de transposition descendante permet donc de régulièrement mettre à jour les coefficients de pré-distorsion. Cette technique nécessite une phase d'apprentissage, pendant laquelle on autorise très souvent une dégradation de la pureté spectrale de l'émission. La pureté spectrale se trouve en outre limitée par la présence d'un modulateur classique dans la chaîne de transposition montante.

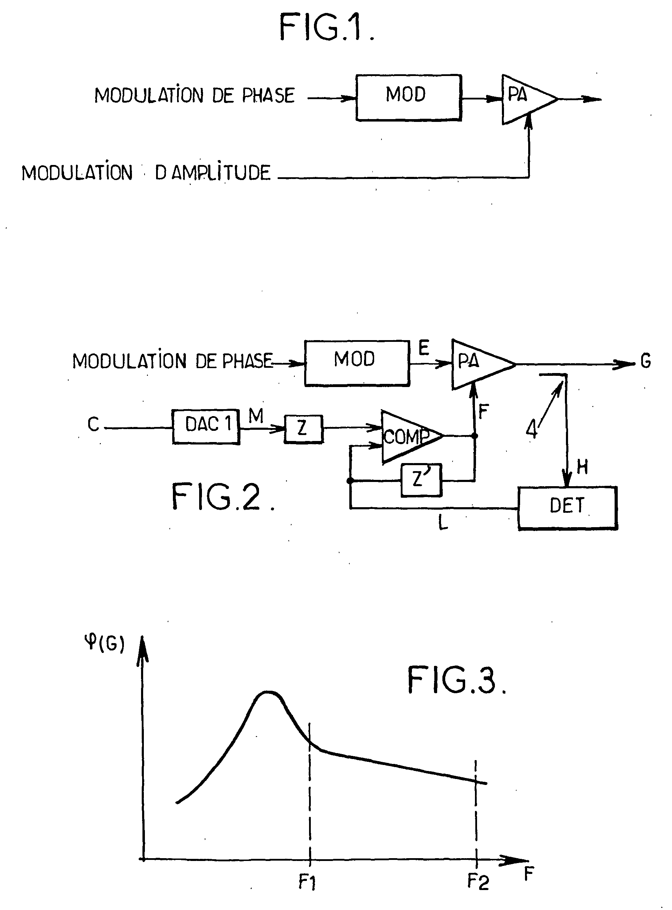

Dans la technique EER (de l'anglais "Envelope Elimination and Restoration"), dont le principe est illustré par le schéma de la figure 1, la modulation du signal radiofréquence à émettre est décomposée en une composante de modulation de phase ou de fréquence et une composante de modulation d'amplitude. Ces deux composantes sont générées en bande de base. La composante de modulation de phase ou de fréquence attaque un modulateur de phase ou de fréquence MOD (par exemple une boucle de recopie), qui assure la transposition de cette composante vers le domaine des radiofréquences. Le signal en sortie de ce modulateur est un signal d'amplitude sensiblement constante modulé en phase ou fréquence. Ce signal est amplifié grâce à l'amplificateur de puissance radiofréquence PA. La composante de modulation d'amplitude est utilisée, via des circuits d'adaptation non représentés, pour commander le gain de l'amplificateur de puissance PA. L'amplificateur de puissance PA peut être un composant comprenant une entrée de commande de gain ou un assemblage de composants comprenant une entrée de commande de gain. Ainsi, la composante de modulation d'amplitude est superposée à la composante de modulation de phase ou de fréquence pour obtenir le signal radiofréquence désiré en sortie de l'amplificateur de puissance radiofréquence PA. Ces deux composantes utilisent des chemins différents pour atteindre la sortie de l'amplificateur. Pour annuler les non-linéarités, en particulier celles induites par l'amplificateur de puissance radiofréquence PA, il est nécessaire d'introduire des dispositifs de correction de ces non-linéarités. Une boucle d'asservissement analogique de la modulation en amplitude peut être introduite, comme montré sur le schéma de la figure 2, qui sera décrite en détails plus loin. Cette boucle d'asservissement permet de compenser les non-linéarités en amplitude. Pour compenser les non-linéarités en phase, il est possible d'introduire, comme pour les techniques CLLT ou ABP, une chaîne de transposition descendante comprenant un démodulateur.

Cette solution est divulguée dans le document WO 01/76169 qui divulgue des moyens d'adaptation fonctionnant en continu à partir d'un signal ramené en bande de base.

Toutefois, un tel démodulateur, comprend un oscillateur local pour effectuer la transposition du domaine des radiofréquences vers la bande de base. Cet oscillateur local, non modulé, est à la même fréquence que le signal à émettre. Ceci pose des problèmes complexes de découplage entre cet oscillateur local et le signal à émettre, en particulier pour les émetteurs radiofréquences des stations mobiles en raison des contraintes liées à leur compacité. De plus, le pas de synthèse de cet oscillateur local est égal au pas de canal du système de radiocommunications concerné. Cet oscillateur local est en outre un élément complexe et encombrant.

L'invention vise à proposer une technique pour compenser les non-linéarités en phase dans un générateur reposant sur la technique EER, qui permette entre autres, de s'affranchir de la présence d'un démodulateur avec un oscillateur local.

Ce but est atteint conformément à l'invention grâce à un générateur d'un signal radiofréquence modulé en phase ou fréquence et en amplitude convenant pour l'émission radioélectrique, comprenant :
- des moyens de génération d'un signal de commande de phase ou de fréquence et d'un signal de commande d'amplitude, à partir d'un signal de modulation de phase ou de fréquence et d'un signal de modulation d'amplitude ;
- des moyens de modulation de phase ou de fréquence comprenant une entrée qui reçoit le signal de commande de phase ou de fréquence, et une sortie qui délivre un signal radiofréquence d'amplitude sensiblement constante modulé en phase ;
- un amplificateur de puissance radiofréquence à gain variable, comprenant une entrée qui reçoit le signal radiofréquence d'amplitude sensiblement constante modulé en phase ou fréquence, une sortie qui délivre le signal radiofréquence modulé en phase ou fréquence et en amplitude, et une entrée de commande de gain qui reçoit le signal de commande d'amplitude,
dans lequel les moyens de génération comprennent des moyens d'asservissement de l'amplitude du signal de sortie, et, en outre, des moyens de pré-distorsion adaptative qui sont agencés pour, pendant une phase de fonctionnement permanent, réaliser une pré-distorsion du signal de commande de phase ou de fréquence en fonction du signal de modulation d'amplitude, et pour, pendant une phase d'apprentissage, être adaptés à partir du signal de modulation d'amplitude et du signal de commande d'amplitude.

Les moyens d'asservissement de l'amplitude du signal de sortie permettent de compenser les conversions AM/AM. Dans un exemple de réalisation préféré, il s'agit de moyens analogiques.

Les moyens de pré-distorsion réalisent une pré-distorsion du signal de modulation de phase ou de fréquence. Ils permettent de compenser les conversions AM/PM. Du fait qu'ils fonctionnent à partir du signal de modulateur d'amplitude et du signal de commande d'amplitude, le générateur ne comprend pas d'oscillateur local.

L'invention propose également un émetteur radiofréquence, par exemple pour une utilisation dans une station mobile ou une station fixe d'un système de radiocommunications, comprenant un générateur tel que défini ci-dessus.

Elle propose enfin une station mobile et une station fixe d'un système de radiocommunications comprenant un tel émetteur, ainsi qu'un système de radiocommunications, notamment un système PMR, incorporant au moins une telle station mobile et/ou au moins une telle station fixe.

D'autres caractéristiques et avantages de l'invention apparaîtront à la lecture de la description qui va suivre. Celle-ci est purement illustrative et doit être lue en regard des dessins annexés sur lesquels on a représenté :
- à la figure 1, déjà analysée : le schéma du principe d'un générateur d'un signal radiofréquence modulé en phase ou fréquence et en amplitude reposant sur la technique EER ;
- à la figure 2 : le schéma d'une boucle d'asservissement analogique de l'amplitude de sortie de l'amplificateur de puissance ;
- à la figure 3 : le graphe de la courbe de la phase du signal de sortie d'un amplificateur de puissance en fonction du signal de commande d'amplitude ;
- à la figure 4 : le schéma d'un premier mode de réalisation d'un générateur selon l'invention ;
- à la figure 5 : le schéma d'un deuxième mode de réalisation d'un générateur selon l'invention ;
- à la figure 6 : le schéma d'un émetteur radiofréquence selon l'invention ;
- à la figure 7 : le schéma d'un système de radiocommunications selon l'invention.

Sur les figures et dans la suite, les mêmes éléments portent les mêmes références. Dans la suite, le signal radiofréquence G qui est modulé, d'une part, en phase ou en fréquence et, d'autre part, en amplitude, est aussi appelé signal de sortie du générateur. C'est un signal convenant pour l'émission radioélectrique, via une antenne ou un câble.

Le générateur d'un signal radiofréquence modulé en phase ou fréquence et en amplitude selon l'invention repose sur la technique EER, dont le principe a été présenté en introduction en regard du schéma de la figure 1. Dans l'exemple considéré dans la présente description, on envisage le cas d'une modulation de phase, sachant que l'invention s'applique aussi à une modulation de fréquence. Par souci de simplicité de l'exposé, la mention de cette alternative ne sera pas répétée dans la suite.

La composante de modulation de phase est déterminée par un signal de modulation de phase B et la composante de modulation d'amplitude est déterminée par un signal de modulation d'amplitude C, ces signaux étant, par exemple, des signaux numériques.

Le schéma de la figure 2 montre des moyens de compensation des non-linéarités en amplitude (conversions AM/AM) de l'amplificateur de puissance PA pour un générateur du type représenté à la figure 1.

Ces moyens de compensation comprennent des moyens d'asservissement de l'amplitude du signal de sortie G, notamment une boucle analogique pour asservir le signal de sortie G à une consigne analogique M. Lorsque, comme c'est le cas dans l'exemple considéré ici, le signal de modulation d'amplitude C est un signal numérique, la consigne M est obtenue par conversion numérique / analogique de ce signal via un convertisseur numérique / analogique DAC1. Lorsque au contraire le signal de modulation d'amplitude C est un signal analogique, la consigne est directement constituée par ce signal.

La boucle analogique d'asservissement comprend un amplificateur COMP fonctionnant en intégrateur, dont une première entrée reçoit la consigne M via une impédance Z, dont une seconde entrée reçoit un signal analogique L, et dont la sortie délivre un signal de commande d'amplitude F. Ce dernier est appliqué sur une entrée de commande de gain de l'amplificateur PA. La sortie de l'amplificateur COMP est bouclée sur sa seconde entrée, via une impédance Z'.

La boucle d'asservissement analogique comprend en outre des moyens de couplage, tels qu'un coupleur radiofréquence 4, délivrant un signal H image du signal de sortie G.

Elle comprend enfin un détecteur DET dont l'entrée reçoit le signal H et dont la sortie délivre le signal L précité. La fonction du détecteur DET est d'extraire du signal H la composante de modulation d'amplitude du signal de sortie G, en appliquant un redressement et un filtrage passe-bas au signal H de manière que l'amplitude en tension du signal L, classiquement exprimée en décibel (dBv), soit fonction de la puissance instantanée du signal H, classiquement exprimée en décibel (dBm). Le signal L est donc représentatif de la composante de modulation d'amplitude réellement présente dans le signal de sortie G. Il convient de noter ici que la boucle analogique d'asservissement, et en particulier le détecteur DET, ne comprennent pas d'oscillateur local.

Le signal L et la consigne M sont très proches l'un de l'autre, et ne diffèrent que par l'effet des conversions AM/AM dans l'amplificateur PA. Le signal L est comparé à la consigne M par l'amplificateur intégrateur COMP, qui produit le signal de commande d'amplitude F en fonction de leur différence.

L'invention propose un générateur reposant sur la technique EER, qui non seulement comprend des moyens d'asservissement de l'amplitude du signal de sortie tels que décrits ci-dessus, pour compenser les conversions AM/AM, mais qui comprend en outre des moyens de pré-distorsion en phase adaptative pour compenser les conversions AM/PM.

Le graphe de la figure 3 montre la courbe de la phase ϕ(G) du signal de sortie G en fonction du signal de commande d'amplitude F qui est appliqué sur l'entrée de commande de gain de l'amplificateur de puissance radiofréquences PA, en l'absence de modulation de phase. Cette courbe est donc la courbe des conversions AM/PM en fonction du signal de commande d'amplitude F.

Ainsi qu'on le voit sur cette figure, la phase ϕ(G) varie de façon sensiblement linéaire en fonction de F pour les valeurs de F comprises entre une valeur F1 et une valeur F2 qui définissent une zone englobant la zone active de l'amplificateur PA. Dit autrement, les conversions AM/PM dans le générateur dépendent au premier ordre du signal de commande d'amplitude F à l'intérieur de la zone active de l'amplificateur de puissance PA. Dit autrement, encore, le signal de commande d'amplitude F dans la zone de fonctionnement de l'amplificateur de puissance PA est une image des conversions AM/PM dans le générateur. Par zone active, on entend ici zone de fonctionnement normal de l'amplificateur de puissance PA.

De plus, on peut montrer que l'influence de la fréquence d'émission (i.e., la fréquence déterminée par le signal E) n'intervient sur les conversions AM/PM qu'au second ordre, et se traduit par une translation verticale, vers le haut ou vers le bas, de la courbe ϕ(G)=f(F) dans la zone [F1,F2]. D'autres paramètres n'ont d'influence, également, qu'au second ordre sur les conversions AM/PM. Il s'agit notamment de la température, de la tension d'alimentation et de la puissance d'entrée de l'amplificateur de puissance radiofréquence PA.

L'observation du phénomène ci-dessus est à la base de l'invention. En effet, l'invention propose d'exploiter ce phénomène pour réaliser, dans une phase d'apprentissage, l'adaptation des moyens de pré-distorsion en phase qui permettent de compenser les conversions AM/PM. Cette méthode donne des résultats qui sont d'autant meilleurs que la profondeur de modulation d'amplitude est faible.

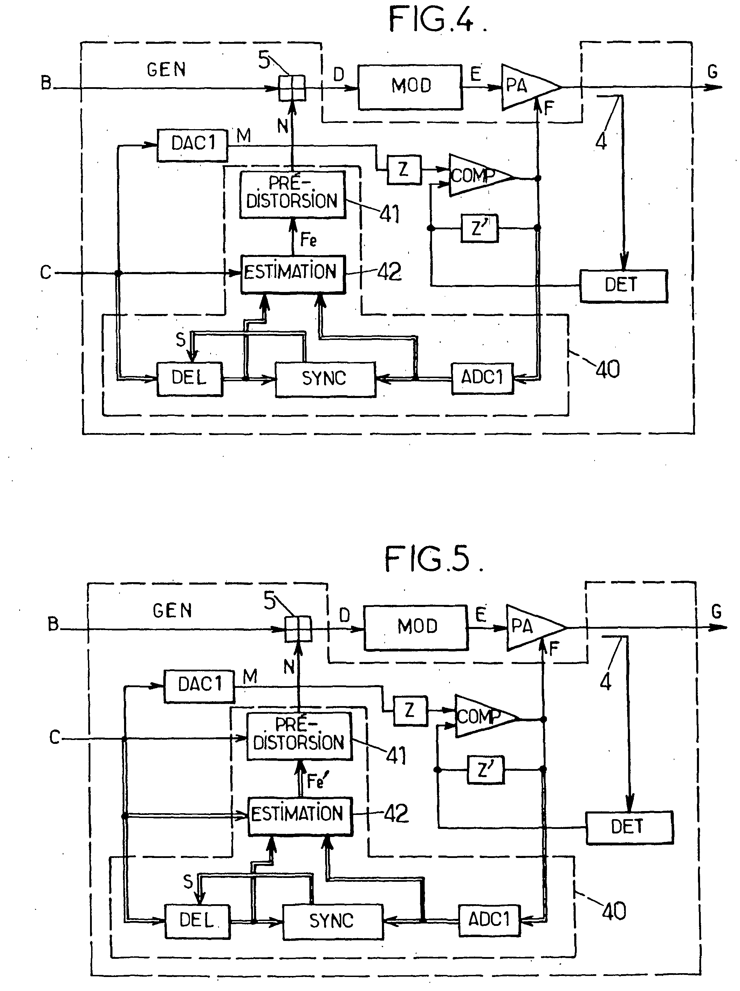

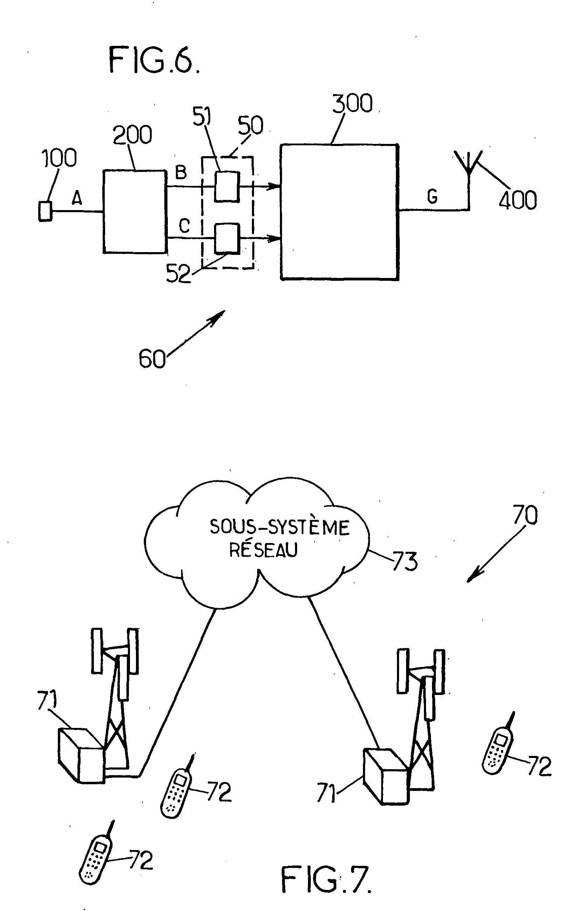

A la figure 4 et à la figure 5, on a représenté le schéma respectivement d'un premier et d'un second modes de réalisation d'un générateur selon l'invention. Sur ces figures, on a représenté par des doubles traits les liaisons entre les éléments qui n'interviennent que pendant la phase d'apprentissage.

Le générateur comprend des moyens GEN de génération d'un signal de commande de phase D et d'un signal de commande d'amplitude F, à partir du signal de modulation de phase B et du signal de modulation d'amplitude C, respectivement. Le signal D peut être un signal numérique ou analogique, alors que le signal F est par exemple un signal analogique. La structure des moyens GEN sera détaillée plus loin.

Le générateur comprend aussi des moyens de modulation de phase MOD dont une entrée reçoit le signal de commande de phase D et dont une sortie délivre un signal radiofréquence E d'amplitude sensiblement constante modulé en phase, en fonction du signal de commande de phase D.

Les moyens MOD comprennent préférentiellement un synthétiseur de modulation numérique (circuit DMS, de l'anglais "Digital Modulation Synthetizer"). Dans ce cas, le signal de commande de phase D est un signal numérique, qui est converti en un signal de commande de fréquence en amont du circuit DMS ou dans le circuit DMS. Un circuit DMS permet une meilleure intégration du générateur en raison de son faible encombrement. En effet, cet encombrement est plus faible, par exemple, que celui d'un modulateur analogique à boucle verrouillée en phase (dite PLL, de l'anglais "Phase Locked Loop"). En outre, il présente une bonne pureté spectrale.

En variante, les moyens MOD comprennent une boucle de recopie de phase, qui présente également une bonne pureté spectrale. Dans ce cas, le signal de commande de phase D est généré sous la forme d'une composante en phase et d'une composante en quadrature.

En variante encore, les moyens MOD peuvent aussi comprendre un modulateur à PLL classique. Dans ce cas, le signal de commande de phase D est un signal analogique.

Le générateur comporte enfin un amplificateur de puissance radiofréquence à gain variable PA, dont l'entrée est couplée à la sortie des moyens de modulation de phase MOD pour recevoir le signal radiofréquence E, dont une entrée de commande de gain reçoit le signal de commande d'amplitude F, et dont la sortie délivre un signal radiofréquence modulé en phase et en amplitude, qui est le signal de sortie G du générateur. Ce signal convient pour l'émission radioélectrique via une antenne ou un câble. Ainsi, la sortie de l'amplificateur PA constitue la sortie du générateur, et peut être couplée à une antenne ou un câble pour l'émission radioélectrique du signal G.

Le signal de commande d'amplitude F peut être un signal de commande de gain. Il peut s'agir, par exemple, d'une tension de grille (Vgg) et/ou d'une tension de drain (Vdd) lorsque l'amplificateur PA est une amplificateur à base de transistor(s) MOS. Il peut aussi s'agir d'une tension de base (Vbb) et/ou d'une tension de base de collecteur (Vcc) lorsque l'amplificateur PA est un amplificateur à base de transistor(s) bipolaires. Il peut aussi s'agir de la combinaison de plusieurs tensions telles que ci-dessus.

Dans une variante également envisageable, la modulation d'amplitude est introduite via un atténuateur variable. Le signal de commande d'amplitude F est alors un signal de commande d'atténuation.

Pour obtenir un rendement en puissance élevé, l'amplificateur PA est préférentiellement agencé pour fonctionner dans une zone de fonctionnement proche de la saturation. C'est pourquoi les moyens GEN comprennent des moyens permettant de compenser les conversions AM/AM et les conversions AM/PM, pour en annuler les effets sur le signal de sortie G.

Pour compenser les conversions AM/AM, les moyens GEN comprennent des moyens d'asservissement de l'amplitude du signal de sortie G. Dans l'exemple représenté à la figure 4, ces moyens comprennent une boucle analogique d'asservissement de l'amplitude du signal de sortie G tels que décrite ci-dessus en regard du schéma de la figure 2. Ces moyens ne seront pas décrits à nouveau.

En variante, les moyens d'asservissement de l'amplitude du signal de sortie G comprennent des moyens de pré-distorsion adaptative du signal de modulation d'amplitude C. De tels moyens de pré-distorsion sont en général des moyens numériques reposant sur un algorithme de pré-distorsion ou une table de valeurs de pré-distorsion.

Pour compenser les conversions AM/PM, les moyens GEN comprennent en outre des moyens 40 de pré-distorsion en phase. La pré-distorsion en phase est adaptative afin de prendre en compte la dispersion des composants électroniques qui entrent dans la composition du générateur, et des conditions de fonctionnement (phénomène de dérive des composants avec le vieillissement et, surtout, la température). On distingue donc une phase de fonctionnement permanent, et une phase d'apprentissage.

Pendant la phase de fonctionnement permanent, les moyens de pré-distorsion en phase 40 réalisent une pré-distorsion en phase du signal de commande de phase D en fonction du signal de modulation d'amplitude C. Plus particulièrement, le signal D est obtenu à partir du signal de modulation de phase B en appliquant une pré-distorsion en phase. A cet effet, les moyens 40 comprennent un module de pré-distorsion 41, qui génère un signal numérique de pré-distorsion N qui est combiné avec le signal de modulation de phase B dans un opérateur 5. Dans un exemple, l'opérateur 5 réalise la somme numérique entre les valeurs du signal B et celles du signal N.

Le module de pré-distorsion 41 est par exemple un module logiciel, qui met en oeuvre un algorithme de pré-distorsion approprié, en fonction d'un paramètre d'entrée. En variante, il s'agit d'une table de pré-distorsion, qui délivre des valeurs appropriées du signal de pré-distorsion, en fonction d'un paramètre d'entrée.

Pendant la phase d'apprentissage, les moyens de pré-distorsion en phase 40 sont adaptés à partir du signal de modulation d'amplitude C et du signal de commande d'amplitude F. A cet effet, les moyens de pré-distorsion en phase adaptative 40 comprennent en outre un convertisseur analogique/numérique ADC1, pour numériser le signal F. L'adaptation peut également prendre en compte les paramètres précités ayant une influence au second ordre sur les conversions AM/PM, à savoir, la fréquence d'émission, la température, la tension d'alimentation, la puissance d'entrée de l'amplificateur de puissance radiofréquence, etc. Ceci procure davantage de précision pour l'apprentissage.

Les moyens de pré-distorsion 40 comprennent en outre un module d'estimation 42 générant un signal de commande d'amplitude estimé Fe. Le module 42 est par exemple réalisé sous la forme d'un logiciel. Le signal F numérisé par le convertisseur ADC1 est fourni en entrée du module d'estimation 42.

Le module d'estimation 42 a pour fonction d'estimer, à un instant donné pendant la phase de fonctionnement permanent, la valeur du signal de commande d'amplitude F à partir de la valeur du signal de modulation d'amplitude C. Le module 42 est adapté, pendant la phase d'apprentissage, en fonction du signal de modulation d'amplitude C et du signal de commande d'amplitude F numérisé. Dit autrement, la phase d'apprentissage du module d'estimation 42 permet d'établir la correspondance entre les valeurs de ces deux signaux C et F. Comme il a été dit plus haut, le signal F dépend alors, au premier ordre, des conversions AM/PM induites dans le générateur. La phase d'apprentissage du module d'estimation 42 permet donc d'établir la correspondance entre les valeurs du signal de modulation de phase C et les conversions AM/PM induites dans le générateur.

Le signal de modulation d'amplitude C parvient à l'entrée de commande de gain de l'amplificateur PA à travers la boucle analogique d'asservissement et, en outre, à travers des filtres non représentés. Afin de tenir compte du retard qui en découle, le signal C doit être retardé dans un module retardateur DEL avant d'être délivré en entrée du module d'estimation 42 pour y être comparé avec le signal de commande d'amplitude F numérisé. Un module de synchronisation SYNC reçoit le signal délivré par le module retardateur DEL et le signal délivré par le convertisseur ADC1, et délivre en sortie un signal de synchronisation S qui commande le module retardateur DEL de façon appropriée. Le module retardateur DEL est par exemple un registre à décalage pilote (i.e., à retard commandé). Le module SYNC est par exemple un module logiciel, qui implémente une fonction de corrélation.

Dans le mode de réalisation conforme à la figure 4, le paramètre d'entrée du module de pré-distorsion 41 mentionné ci-dessus est le signal de commande d'amplitude estimé Fe, qui est généré par le module d'estimation 42 à partir du signal de modulation d'amplitude C.

Dit autrement, pendant la phase de fonctionnement permanent, le module de pré-distorsion 41 est commandé par le signal de commande d'amplitude estimé Fe qui est délivré par le module d'estimation 42, ce dernier étant commandé par le signal de modulation d'amplitude C. Pendant la phase d'apprentissage, le module d'estimation 42 est adapté à partir du signal de modulation d'amplitude C et du signal de commande d'amplitude F, ainsi qu'il a été dit plus haut.

Dans le mode de réalisation conforme à la figure 5, le paramètre d'entrée du module de pré-distorsion 41 est le signal de modulation d'amplitude C. Dit autrement, le module de pré-distorsion 41 est commandé par le signal de modulation d'amplitude C pendant la phase de fonctionnement permanent.

En outre, pendant la phase d'apprentissage, le module de pré-distorsion 41 est adapté à partir d'un signal Fe' représentatif du signal de commande d'amplitude estimé Fe introduit ci-dessus, qui est généré par le module d'estimation 42 à partir du signal de modulation d'amplitude C.

Ce mode de réalisation rend la phase d'apprentissage plus complexe, mais simplifie la phase de fonctionnement permanent.

La figure 6 donne le schéma d'un émetteur radiofréquence selon l'invention.

L'émetteur 60 comprend une entrée de données 100 pour recevoir un message numérique A contenant des données à émettre. Lorsque l'émetteur est utilisé dans une station mobile ou une station fixe d'un système de radiocommunications, l'entrée 100 peut être reliée à la sortie d'un codeur de parole ou d'un codeur de canal.

L'émetteur comprend également des moyens de codage composites tels qu'un codeur 200 pour générer, à partir du message numérique A, une première suite de valeurs numériques constituant le signal de modulation de phase B, et une seconde suite de valeurs numériques constituant le signal de modulation d'amplitude C.

Du fait que la composante de modulation de phase et la composante de modulation d'amplitude sont transposées de la bande de base vers le domaine radiofréquence par des moyens distincts, à savoir respectivement par les moyens de modulation de phase MOD et par l'amplificateur de puissance radiofréquence à gain variable PA, la composante de modulation de phase et la composante de modulation d'amplitude empruntent des chemins différents avant d'être combinées dans le signal de sortie G. Or, selon le type de codage utilisé, il est nécessaire que la composante de modulation de phase soit synchronisée avec la composante de modulation d'amplitude dans le signal émis, afin de permettre un décodage correct côté récepteur et une pureté spectrale satisfaisante en émission. Il est alors souhaitable de compenser les différences entre les délais de transmission de ces deux composantes sur leurs chemins respectifs.

Ceci est réalisé par des moyens de calage temporel ad-hoc. Ces moyens de calage temporel 50 comprennent par exemple des premiers moyens numériques 51 pour appliquer un retard à la composante de modulation de phase B et/ou des seconds moyens numériques 52 pour appliquer un retard à la composante de modulation d'amplitude C de manière que la composante de modulation de phase B soit synchronisée avec la composante de modulation d'amplitude C dans le signal de sortie G. Ces moyens numériques peuvent comprendre un registre à décalage, un filtre retardateur (par exemple un filtre en sinus cardinal), etc. Une telle solution numérique présente l'avantage de permettre une bonne intégration du dispositif.

En variante, les moyens de calage temporel comprennent des moyens analogiques, en remplacement ou en complément des moyens numériques précités. De tels moyens analogiques comprennent par exemple une ou plusieurs lignes à retard.

L'émetteur comprend en outre, en aval du codeur 200 et des moyens de calage temporel 50, un générateur 300 d'un signal modulé en phase et en amplitude, tel que décrit ci-dessus en regard des figures 2, 4 et 5.

L'émetteur comprend enfin une antenne radiofréquence 400, reliée à la sortie du générateur 300. Cette antenne permet l'émission du signal radiofréquence modulé en phase et en amplitude G sur le canal de transmission. En variante, l'antenne 400 peut être remplacée par un câble.

A la figure 7, on a représenté de façon schématique un système de radiocommunications selon l'invention. Le système 70 comprend un sous-système réseau, représenté symboliquement par un nuage 73. Il comprend aussi un sous-système radio, comprenant des stations mobiles 71 et/ou des stations fixes 72. Les stations mobiles 71 sont par exemple des terminaux portables ou portatifs. Les stations fixes 72 sont par exemple des stations de base, assurant l'interface radio avec les stations mobiles qui se trouvent à l'intérieur de leur zone de couverture radio. En variante, il peut s'agir de terminaux fixes.

Selon l'invention, au moins une station fixe 71 et/ou au moins une station mobile 72 du système 70 sont équipées d'un émetteur radiofréquence 60 conforme au schéma de la figure 6.

## Revendications

1. Générateur d'un signal radiofréquence (G) modulé en phase ou fréquence et en amplitude convenant pour l'émission radioélectrique, comprenant:
- des moyens de génération (GEN) d'un signal de commande de phase ou de fréquence (D) et d'un signal de commande d'amplitude (F), à partir d'un signal de modulation de phase ou de fréquence (B) et d'un signal de modulation d'amplitude (C) ;
- des moyens de modulation de phase ou de fréquence (MOD) comprenant une entrée qui reçoit le signal de commande de phase ou de fréquence (D), et une sortie qui délivre un signal radiofréquence d'amplitude sensiblement constante modulé en phase ou fréquence (E) ;
- un amplificateur de puissance radiofréquence (PA) à gain variable, comprenant une entrée qui reçoit le signal radiofréquence d'amplitude sensiblement constante modulé en phase ou fréquence (E), une sortie qui délivre le signal radiofréquence (G) modulé en phase ou fréquence et en amplitude, et une entrée de commande de gain qui reçoit le signal de commande d'amplitude (F),
dans lequel les moyens de génération (GEN) comprennent des moyens d'asservissement de l'amplitude du signal de sortie (G), et, en outre, des moyens de pré-distorsion adaptative (40) qui sont agencés pour, pendant une phase de fonctionnement permanent, réaliser une pré-distorsion du signal de commande de phase ou de fréquence (D) en fonction du signal de modulation d'amplitude (C), et pour, pendant une phase d'apprentissage, être adaptés à partir du signal de modulation d'amplitude (C) et du signal de commande d'amplitude (F).

2. Générateur selon la revendication 1, dans lequel les moyens de pré-distorsion adaptative (40) comprennent un module de pré-distorsion (41), et un module d'estimation (42) produisant un signal de commande d'amplitude estimé (Fe) à partir du signal de modulation d'amplitude (C).

3. Générateur selon la revendication 2, dans lequel, pendant la phase de fonctionnement permanent, ledit module de pré-distorsion (41) est commandé par le signal de commande d'amplitude estimé (Fe) et ledit module d'estimation (42) est commandé par le signal de modulation d'amplitude (C), et dans lequel, pendant la phase d'apprentissage, ledit module d'estimation (42) est adapté à partir du signal de modulation d'amplitude (C) et du signal de commande d'amplitude (F).

4. Générateur selon la revendication 2, dans lequel, pendant la phase de fonctionnement permanent, ledit module de pré-distorsion (41) est commandé par le signal de modulation d'amplitude (C), et dans lequel, pendant la phase d'apprentissage, ledit module de pré-distorsion (41) est adapté à partir d'un signal (Fe') représentatif du signal de commande d'amplitude estimé (Fe).

5. Générateur selon l'une quelconque des revendications 1 à 4, dans lequel les moyens d'asservissement de l'amplitude du signal de sortie (G) sont des moyens analogiques.

6. Générateur selon la revendication 5, dans lequel lesdits moyens analogiques d'asservissement de l'amplitude du signal de sortie (G) comprennent des moyens de couplage (4) délivrant un signal (H) image du signal de sortie (G), un détecteur (DET) dont une entrée reçoit le signal (H) image du signal de sortie (G) et dont une sortie délivre un signal (L) représentatif de la composante de modulation d'amplitude présente dans le signal de sortie (G), un comparateur (COMP), dont une première entrée reçoit le signal de modulation d'amplitude (C), dont une seconde entrée reçoit ledit signal (L) représentatif de la composante de modulation d'amplitude réellement présente dans le signal de sortie (G), et dont la sortie délivre le signal de commande d'amplitude (F) qui est appliqué sur l'entrée de commande de gain de l'amplificateur de puissance (PA).

7. Générateur selon l'une quelconque des revendications précédentes, dans lequel les moyens de génération (GEN) comprennent des moyens (50) de calage temporel du signal de commande de phase ou de fréquence (D) et du signal de commande d'amplitude (F) de manière que la composante de modulation de phase ou de fréquence soit synchronisée avec la composante de modulation d'amplitude dans le signal de sortie (G).

8. Emetteur radiofréquence (60), comprenant un générateur selon l'une quelconque des revendications précédentes.

9. Station mobile (71) d'un système de radiocommunications (70), comprenant un émetteur (60) selon la revendication 8.

10. Station fixe (72) d'un système de radiocommunications (70), comprenant un émetteur (60) selon la revendication 8.

11. Système de radiocommunications (70), notamment système privé de radiocommunications professionnelles, comprenant au moins une station mobile (71) selon la revendication 9, et/ou au moins une station fixe (72) selon la revendication 10.

## Patentansprüche

1. Generator (G) für ein phasen- oder frequenzmoduliertes und amplitudenmoduliertes Funkfrequenzsignal, der geeignet ist für das drahtlose Senden, umfassend:
- Generierungsmittel (GEN) für ein Phasen- oder Frequenzsteuersignal (D) und ein Amplitudensteuersignal (F) ausgehend von einem Phasen- oder Frequenzmodulierungssignal (B) und einem Amplitudenmodulierungssignal (C);
- Mittel zur Phasen- oder Frequenzmodulierung (MOD), umfassend einen Eingang, der das Phasen- oder Frequenzsteuersignal (D) empfängt, und einen Ausgang, der ein phasen- oder frequenzmoduliertes Funkfrequenzsignal (E) liefert mit einer im wesentlichen konstanten Amplitude;
- einen Funkfrequenzleistungsverstärker (PA) mit variabler Verstärkung, umfassend einen Eingang, der das phasen- oder frequenzmodulierte Funkfrequenzsignal (E) mit der im wesentlichen konstanten Amplitude empfängt, einen Ausgang, der das phasen- oder frequenzmodulierte und amplitudenmodulierte Funkfrequenzsignal (G) liefert, und einen Verstärkungssteuereingang, der das Amplitudensteuersignal (F) empfängt,
bei dem die Generierungsmittel (GEN) Mittel zur Regelung der Ausgangssignalamplitude (G) und femer Mittel (40) zur adaptiven Vorverzerrung umfassen, die dafür eingerichtet sind, während einer permanenten Betriebsphase eine Vorverzerrung des Phasen- oder Frequenzsteuersignals (D) in Funktion des Amplitudenmodulierungssignals (C) zu realisieren, und während einer Lemphase ausgehend vom Amplitudenmodulierungssignal (C) und vom Amplitudensteuersignal (F) adaptiert zu werden.

2. Generator nach Anspruch 1, bei dem die Mittel (40) zur adaptiven Vorverzerrung einen Vorverzerrungsmodul (41) und einen Schätzmodul (42), der ausgehend vom Amplitudenmodulierungssignal (C) ein geschätztes Amplitudensteuersignal (Fe) erzeugt, umfassen.

3. Generator nach Anspruch 2, bei dem während der permanenten Betriebsphase der Vorverzerrungsmodul (41) durch das geschätzte Amplitudensteuersignal (Fe) gesteuert ist, und der Schätzmodul (42) durch das Amplitudenmodulierungssignal (C) gesteuert ist, und bei dem während der Lemphase der Schätzmodul (42) ausgehend vom Amplitudenmodulierungssignal (C) und vom Amplitudensteuersignal (F) adaptiert ist.

4. Generator nach Anspruch 2, bei dem während der permanenten Betriebsphase der Vorverzerrungsmodul (41) durch das Amplitudenmodulierungssignal (C) gesteuert ist, und bei dem während der Lemphase der Vorverzerrungsmodul (41) ausgehend von einem Signal (Fe') adaptiert ist, das repräsentativ für das geschätzte Amplitudensteuersignal (Fe) ist.

5. Generator nach einem der Ansprüche 1 bis 4, bei dem die Mittel zur Regelung der Ausgangssignalamplitude (G) analoge Mittel sind.

6. Generator nach Anspruch 5, bei dem die analogen Mittel zur Regelung der Ausgangssignalamplitude (G) umfassen:
Kopplungsmittel (4), welche ein Signal (H) liefern, das ein Ebenbild des Ausgangssignal (G) ist,
einen Detektor (DET), von dem ein Eingang das Signal (H), das ein Ebenbild des Ausgangssignals (G) ist, empfängt, und von dem ein Ausgang ein Signal (L) liefert, das repräsentativ ist für die im Ausgangssignal (G) vorhandene Amplitudenmodulierungskomponente,
einen Komparator (COMP), von dem ein erster Eingang das Amplitudenmodulierungssignal (C) empfängt, ein zweiter Eingang das Signal (L) empfängt, das repräsentativ für die tatsächlich im Ausgangssignal (G) vorhandene Amplitudenmodulierungskomponente ist, und dessen Ausgang das Amplitudensteuersignal (F) liefert, welches auf den Verstärkungssteuereingang des Leistungsverstärkers (PA) angewendet wird.

7. Generator nach einem der vorhergehenden Ansprüche, bei dem die Generierungsmittel (GEN) Mittel (50) zur zeitlichen Einstellung des Phasen- oder Frequenzsteuersignals (D) und des Amplitudensteuersignals (F) umfassen, derart, dass die Phasen- oder Frequenzmodulierungskomponente mit der Amplitudenmodulierungskomponente im Ausgangssignal (G) synchronisiert ist.

8. Funkfrequenzsender (60), umfassend einen Generator nach einem der vorhergehenden Ansprüche.

9. Mobilstation (71) eines Funkkommunikationssystems (70), umfassend einen Sender (60) nach Anspruch 8.

10. Feststation (72) eines Funkkommunikationssystems (70), umfassend einen Sender (60) nach Anspruch 8.

11. Funkkommunikationssystem (70), insbesondere abgeschlossenes System für gewerbliche Funkkommunikationen, umfassend wenigstens eine Mobilstation (71) nach Anspruch 9 oder/und wenigstens eine Feststation (72) nach Anspruch 10.

## Claims

1. A phase- or frequency-modulated and amplitude-modulated radiofrequency signal generator (G) suitable for radio transmission, comprising:
- means (GEN) for generating a phase or frequency control signal (D) and an amplitude control signal (F), from a phase or frequency modulation signal (B) and from an amplitude modulation signal (C);
- phase or frequency modulation means (MOD) comprising an input which receives the phase or frequency control signal (D), and an output which delivers a phase- or frequency-modulated radiofrequency signal of substantially constant amplitude (E);
- a variable-gain radiofrequency power amplifier (PA) comprising an input which receives the phase- or frequency-modulated radiofrequency signal of substantially constant amplitude (E), an output which delivers the phase- or frequency-modulated and amplitude-modulated radiofrequency signal (G), and a gain control input which receives the amplitude control signal (F),
wherein the generating means (GEN) comprise means of feedback control of the amplitude of the output signal (G), and, further, means of adaptive predistortion (40) which are arranged so as, during a phase of continuous operation, to carry out a predistortion of the phase or frequency control signal (D) as a function of the amplitude modulation signal (C), and so as, during a learning phase, to be adapted on the basis of the amplitude modulation signal (C) and of the amplitude control signal (F).

2. The generator as claimed in claim 1, wherein the adaptive predistortion means (40) comprise a predistortion module (41), and an estimation module (42) producing an estimated amplitude control signal (Fe) from the amplitude modulation signal (C).

3. The generator as claimed in claim 2, wherein, during the phase of continuous operation, said predistortion module (41) is controlled by the estimated amplitude control signal (Fe) and said estimation module (42) is controlled by the amplitude modulation signal (C), and wherein, during the learning phase, said estimation module (42) is adapted on the basis of the amplitude modulation signal (C) and of the amplitude control signal (F).

4. The generator as claimed in claim 2, wherein, during the phase of continuous operation, said predistortion module (41) is controlled by the amplitude modulation signal (C), and wherein, during the learning phase, said predistortion module (41) is adapted on the basis of a signal (Fe') representative of the estimated amplitude control signal (Fe).

5. The generator as claimed in any one of claims 1 to 4, wherein the means of feedback control of the amplitude of the output signal (G) are analog means.

6. The generator as claimed in claim 5, wherein said analog means of feedback control of the amplitude of the output signal (G) comprise coupling means (4) delivering a signal (H) the image of the output signal (G), a detector (DET), an input of which receives the signal (H) the image of the output signal (G) and an output of which delivers a signal (L) representative of the amplitude modulation component present in the output signal (G), a comparator (COMP), a first input of which receives the amplitude modulation signal (C), a second input of which receives said signal (L) representative of the amplitude modulation component actually present in the output signal (G), and the output of which delivers the amplitude control signal (F) which is applied to the gain control input of the power amplifier (PA).

7. The generator as claimed in any one of the preceding claims, wherein the generating means (GEN) comprise means (50) of temporal clamping of the phase or frequency control signal (D) and of the amplitude control signal (F) in such a way that the phase or frequency modulation component is synchronized with the amplitude modulation component in the output signal (G).

8. A radiofrequency transmitter (60) comprising a generator as claimed in any one of the preceding claims.

9. A mobile station (71) of a radiocommunications system (70), comprising a transmitter (60) as claimed in claim 8.

10. A fixed station (72) of a radiocommunications system (70), comprising a transmitter (60) as claimed in claim 8.

11. A radiocommunications system (70), in particular a private system for professional radiocommunications, comprising at least one mobile station (71) as claimed in claim 9 and/or at least one fixed station (72) as claimed in claim 10.
